# EUROPEAN PATENT APPLICATION

(11) **EP 4 663 022 A1**
(43) Date of publication of application: **17.12.2025**
(21) Application number: 24000071.1
(22) Date of filing: 10.06.2024
(51) Int. Cl.: A21D 10/02, A21D 13/31, A23P 20/20, A23G 3/54, A23L 13/60, A23L 17/00, A23L 19/00

(54) **FOOD PRODUCT CONSISTING OF TWO OR MORE DIFFERENT EDIBLE INGREDIENTS, PROCESS FOR PREPARING A FOOD PRODUCTS AND USE OF A FOOD PRODUCT WITH ONE OR MORE EDIBLE BODIES**

(71) Applicant: EHL Hospitality Business School SA, 1000 Lausanne 25 (CH)
(72) Inventor: Ogheard, Patrick, CH-1070 Puidoux (CH); Segui, Christian, CH-1066 Epallinges (CH); Soussan, Antonin, CH-1005 Lausanne (CH); Demongeot, Adrien, CH-1203 Genève (CH)
(74) Representative: Maiwald GmbH

(57) **Abstract**

It is shown how a food product can be preserved over a longer period of time in accordance with the invention.

## Description

### Leading part of invention

The invention relates to a food product, a process for preparing a long-life food product and the use of this food product.

### State of the art

WO 2021/202634 A1 describes a method of preparing a food item, including the steps of placing at least one uncooked protein element and at least one cooked bread element into a package without sealing the at least one cooked bread element to any other element in the package, sealing the package without sealing the at least one cooked bread element to any other element in the package, and forming a food item by cooking the uncooked protein element in the sealed package without sealing the at least one cooked bread element to any other element in the package.

US 2021/0329928 describes a method for the preparation of a food product fermented under vacuum comprising a bakery portion and ingredients, which may include: a first step for preparing the ingredients, a second step for preparing dough, a third step for preparing dough pieces, a step for packaging, in which the dough pieces and the ingredients are assembled and disposed in an impermeable pouch which is vacuum sealed, a step for fermentation, a step for cooking, and a step for cooling.

US 2009/0155426 A1 describes baked microwavable frozen bread and bakery products. A fully assembled frozen food product is provided which comprises a bread portion having a top portion and a bottom portion and having a filling between, and co-extensive with, the top and bottom portions, wherein the fully assembled frozen food product can be heated in a microwave oven to provide a heated food product which is then ready to be eaten, wherein the bread portion of the heated food product is not dried out and wherein the filling in the heated food product has an essentially uniform temperature.

The preparation of food wrapped in a dough, such as sausage in a brioche, is usually achieved by cooking in an oven the product at high temperature (>130°C) before packing. Such process limit the shelf life of the fresh product to 6 days.

### Object

One object of the invention is to propose a food product.

A further object of the invention is to propose a process for the manufacture of such a food product.

Finally, the invention is based on the task of proposing a use of such a food product in accordance with the invention.

### Solution to the object concerning the product

This object is solved by a product, consisting of two or more different edible ingredients, wherein an outer edible body enclosing the inner ingredient(s) or core consists of fermented dough and the food product is subjected to a cooking process.

### Some advantages

According to the invention, an edible product wrapped in dough, possibly consisting of several components, is proposed, which has been cooked in an oven at a low temperature of less than 130°C in the final package consisting of fermented dough. This results in a food product with a long shelf life without organoleptic or microbiological deterioration of the components and without the need for freezing. The coloring of the product can be obtained by reheating in an oven at high temperature after opening the package, if desired.

### Further inventive embodiments

**Claim 2** describes a food product which is characterized in that the outer body of the dough encloses the inner core or the inner bodies in one piece on the periphery or from all sides together.

This product has the advantage of providing multiple flavor and texture.

According to **claim 3,** the food product is characterized in that the outer body consisting of dough is made of flour, water, optionally fat, sugar, egg, salt, yeast and spices and the inner or inner bodies consist of one or more different foodstuffs.

This product has the advantage of being convenient for its consumption.

**Claim 4** describes a food product which is characterized in that the core or inner body or bodies consists of meat and/or meat substitutes and/or vegetables and/or sausage and/or fish and/or sugary preparation.

This product has the advantage in terms of compositional flexibility.

A further food product according to the invention is characterized according to **claim 5** in that the cooked food product is arranged in a sealable container, for example in a jar, a jug, a can or the like.

This product has the advantage of being packaged during manufacture, which extends its shelf life.

Advantageously, the food product according to **claim 6** is characterized in that the color setting of the edible food product is produced by a cooking process.

This product has the advantage that it can be colored by the end-user to suit his tastes.

### Solution to the object concerning the process

This object is solved in accordance with **claim 7** by the following process steps:
(a) Production of an edible body from dough, essentially consisting of flour, water, fat such as butter, sugar, egg, salt and yeast;
(b) shaping the body and portioning;
(c) producing one or more inner bodies from vegetables and/or meat and /or fish products and/or sugary preparation;
(d) shaping the various inner edible bodies;
(e) placing the inner body or bodies in the dough casing and enclosing the inner body or bodies in the dough casing;
(f) fermentation under controlled temperature, humidity and duration;
(g) conditioning;
(h) cooking the food product by a cooking process;
(i) cooling;
(j) restoration and surface coloring.

This process has the advantage that it can be used to introduce all the elements into the final packaging before cooking which avoids contamination after cooking.

### Further inventive embodiments

**Claim 8** describes a process for preparing a food product **characterized by** the following process steps:
(a) Production of an edible body from dough (15), essentially consisting of flour, water, fat such as butter, sugar, egg, salt and yeast;
(b) shaping the body and portioning;
(c) coating the inner body in starch/flour before placing it into a dough;
(d) producing one or more inner bodies from vegetables and/or meat and /or fish products and/or sugary preparation;
(e) shaping the various inner edible bodies or core (16);
(f) placing the inner body or bodies in the dough (15) casing and enclosing the inner body or bodies in the dough (15) casing;
(g) fermentation under controlled temperature, humidity and duration;
(h) conditioning;
(i) cooking the food product by a cooking process;
(j) cooling;
(k) restoration and surface coloring.

This process has the advantage that the core is perfectly surrounded by the dough after cooking.

**Claim 9** is characterized in that the cooking is carried out over a period of 10 minutes to 1 hour at a temperature of between 70°C and 130°C or less and a humidity of between 50% RH and 100% RH.

This results in the advantage of cooking the final product in its final packaging, while pasteurizing the whole.

According to **claim 10** the cooked food product is cooled in a container and the cooling process takes place over a period of 1 hour to 5 hours, preferably from 1 hour to 2 hours, at a temperature of between 0°C and 5°C, preferably from 1°C to 3°C.

This results in the advantage of cooling rapidly the cooked food in accordance with the HACCP method.

**Claim 11** describes a process that the reheating and surface colouring is preferably carried out at the customer's premises in a vessel, for example in a container, over a period of 5 minutes and 1 hour at a temperature of between 130°C and 220°C.

This results in the advantage of reheating the cooked product by the customer and coloring it to suit his taste.

According to **claim 12** a process is characterized in that the fermentation of the food product takes place at temperatures of 5°C and 40°C, preferably between 20°C and 30°C, a humidity of between 50 and 100 %, preferably from 75 % to 95 %, a fermentation time of between 5 minutes and 24 hours, preferably from 30 minutes to 4 hours.

This results in the advantage of controlling fermentation so that the dough fills the jar completely. At this stage, the gap between the product and the inner wall of the jar is resorbed.

### Solution to the object concerning the use

This object is solved by the features of **claim 13.** This use has the advantage to preserve a food product over a longer period of time.

### Further inventive embodiments

**Claim 14** describes a use characterized in that the body enclosed by the dough casing is sausage.

This results in the advantage of being able to cook and pasteurize a single-serving brioche sausage in its final packaging.

**Claim 15** describes a use which is characterized in that the body or bodies enclosed by the dough casing consist of vegetable, meat products or fish products or sugary preparation.

This results in the advantage of being flexible for the choice of core ingredients and the type of dough.

### Example:

A pistachio sausage (lean pork, pork fat, breast, pistachio, salt, ascorbic acid, black pepper, port sugar, cognac), 50 mm height and 40 mm in diameter, is coated with corn starch and rolled in brioche dough (flour, milk, egg, butter, sugar, salt, yeast) measuring 300 mm x 70 mm x 2.5 mm. The whole is placed in a greased jar 95 mm height and 72 mm inside diameter. The filled jar is placed in a growth chamber for 2h at 26°C and 85% RH. At the end of the growing step, the jar lid is fitted and tightened.

The whole assembly is cooked in a combi oven at 110°C and 100% RH for 17 min. At the end of cooking, the cooked product is left in the closed oven switched off for 10 min before cooling and storage in a cold room at 2°C.

The product can then be reheated and colored in a ventilated oven at 160°C for 16 min.

### Example 2:

A cooked tempeh at 80°C for 1h, 50 mm height and 50 mm in diameter, is coated with corn starch and rolled in brioche dough (flour, milk, egg, butter, sugar, salt, yeast) measuring 300 mm x 70 mm x 2.5 mm. The whole is placed in a greased jar 95 mm height and 72 mm inside diameter. The filled jar is placed in a growth chamber for 2h at 26°C and 85% RH. At the end of the growing step, the jar lid is fitted and tightened.

The whole assembly is cooked in a combi oven at 110°C and 100% RH for 17 min. At the end of cooking, the cooked product is left in the closed oven switched off for 10 min before cooling and storage in a cold room at 2°C.

The product can then be reheated and colored in a ventilated oven at 160°C for 16 min.

The invention is shown in the drawing, partly schematically, for example. It shows:

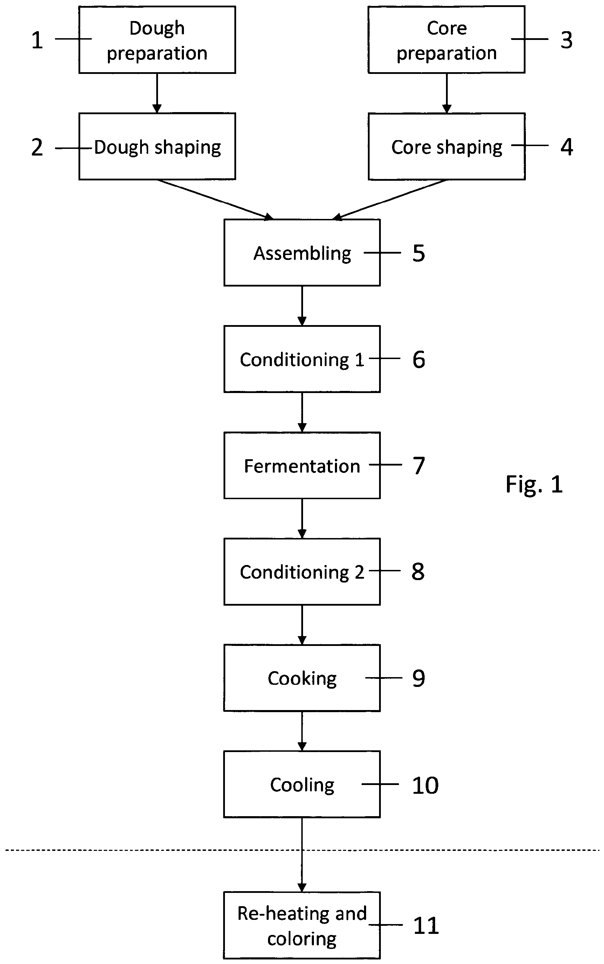

- Fig. 1: A block diagram for the manufacture of a food product according to the invention and
- Fig. 2: an example arrangement of an edible food product according to the invention.

Dough preparation is designated by the reference sign 1. The reference 2 refers to dough shaping.

The reference 3 shows core preparation and 4 core shaping. The reference 5 describes assembling and 6 conditioning 1, while the reference 7 describes the fermentation process step and 8 conditioning 2.

9 shows the cooking step schematically and 10 shows a cooling step. 11 is reheating and surface coloring.

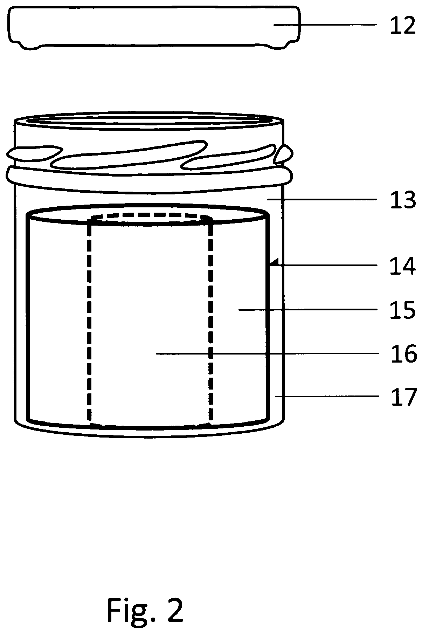

Fig. 2 shows the storage of an edible product according to the invention. The reference 12 describes a lid, for example made of metal, which can be screwed onto a jar 13. The jar can be made of glass or another material. The edible product 14 is arranged in the jar 13 and comprises a dough 15 which wraps the core 16, for example sausage or the like. After conditioning 6, there is a gap 17 between the product 14 and the inner wall of the jar 13. The gap 17 is filled after fermentation 7. The core 16 can be, for example, a pistachio sausage, composed of lean pork, pork fat, breast, pistachio, salt, ascorbic acid, black pepper, port sugar and cognac.

The features described in the claims and in the description and shown in the drawing can be essential for the realization of the invention both individually and in any combination.

## Claims

1. A food product consisting of two or more different edible ingredients, wherein an outer edible body enclosing the inner ingredient(s) or core (16) consists of fermented dough (15) and the food product is subjected to a cooking process.

2. Food product according to claim 1, **characterized in that** the outer body of the dough (15) encloses the core (16) or the inner bodies in one piece on the periphery or from all sides together.

3. Food product according to claim 1 or 2, **characterized in that** the outer body consisting of dough (15) is made of flour, water, optionally fat, sugar, egg, salt, yeast and spices and the inner or inner bodies consist of one or more different foodstuffs.

4. The food product according to claim 1 or one of the following claims, **characterized in that** the core (16) or inner body or bodies consists of meat and/or meat substitutes and/or vegetables and/or sausage and/or fish and/or sugary preparation.

5. Food product according to claim 1 or one of the following claims, **characterized in that** the cooked food product is arranged in a sealable container, for example in a jar (13), a jug, a can or the like.

6. The food product according to claim 1 or one of the following claims, **characterized in that** the color setting of the edible food product (15, 16) is produced by a cooking process.

7. A process for preparing a food product according to claim 1 or one of the following claims, **characterized by** the following process steps:
(a) Production of an edible body from dough (15), essentially consisting of flour, water, fat such as butter, sugar, egg, salt and yeast;
(b) shaping the body and portioning;
(c) producing one or more inner bodies from vegetables and/or meat and /or fish products and/or sugary preparation;
(d) shaping the various inner edible bodies or core (16);
(e) placing the inner body or bodies in the dough (15) casing and enclosing the inner body or bodies in the dough (15) casing;
(f) fermentation under controlled temperature, humidity and duration;
(g) conditioning;
(h) cooking the food product by a cooking process;
(i) cooling;
(j) restoration and surface coloring.

8. A process for preparing a food product according to claim 1 or one of the claims 2 to 6, **characterized by** the following process steps:
(a) Production of an edible body from dough (15), essentially consisting of flour, water, fat such as butter, sugar, egg, salt and yeast;
(b) shaping the body and portioning;
(c) coating the inner body in starch/flour before placing it into a dough;
(d) producing one or more inner bodies from vegetables and/or meat and /or fish products and/or sugary preparation;
(e) shaping the various inner edible bodies or core (16);
(f) placing the inner body or bodies in the dough (15) casing and enclosing the inner body or bodies in the dough (15) casing;
(g) fermentation under controlled temperature, humidity and duration;
(h) conditioning;
(i) cooking the food product by a cooking process;
(j) cooling;
(k) restoration and surface coloring.

9. Process according to claim 7 or 8, **characterized in that** the cooking is carried out over a period of 10 minutes to 1 hour at a temperature of between 70°C and 130°C or less and a humidity of between 50% RH and 100% RH.

10. Process according to claim 7 or one of the following claims, **characterized in that** the cooked food product is cooled in a container and the cooling process takes place over a period of 1 hour to 5 hours, preferably from 1 hour to 2 hours, at a temperature of between 0°C and 5°C, preferably from 1°C to 3°C.

11. Process according to claim 7 or one of the following claims, **characterized in that** the reheating and surface colouring is preferably carried out at the customer's premises in a vessel, for example in a container, over a period of 5 minutes and 1 hour at a temperature of between 130°C and 220°C.

12. Process according to claim 7 or one or more of the following claims, **characterized in that** the fermentation of the food product takes place at temperatures of 5°C and 40°C, preferably between 20°C and 30°C, a humidity of between 50 and 100 %, preferably from 75 % to 95 %, a fermentation time of between 5 minutes and 24 hours, preferably from 30 minutes to 4 hours.

13. Use of a food product with one or more edible bodies enclosing a coating of dough (15) that has undergone a fermentation process and then the product is cooked under controlled conditions, cooled and made available for consumption after reheating.

14. Use of a food product according to claim 1 or one or more of the following claims until 6, **characterized in that** the body enclosed by the dough (15) casing is sausage.

15. Use of a food product according to claim 1 or more of the following claims until 6, **characterized in that** the body or bodies enclosed by the dough (15) casing consist of vegetable, meat products or fish products or sugary preparation.
